Europäisches Patentamt

European Patent Office

Office européen des brevets

(19)

(11) **EP 0 737 380 B1**

(12) **EUROPEAN PATENT SPECIFICATION**

(45) Date of publication and mention
of the grant of the patent:
**22.10.2003 Bulletin 2003/43**

(51) Int Cl.[7]: **H03D 3/00**, H03D 1/06,
H03D 11/04, H03K 9/06,
H03K 5/01, H03K 6/04,
H04B 7/10, H04B 1/10,
H04L 1/00, H04L 1/02,
H04B 7/08, H04B 17/00

(21) Application number: **95905948.6**

(22) Date of filing: **28.12.1994**

(86) International application number:
**PCT/US94/14428**

(87) International publication number:
**WO 95/018486 (06.07.1995 Gazette 1995/29)**

(54) **A WIRELESS DIGITAL SYNCHRONIZED DIVERSITY RECEIVER**

DIGITAL SYNCHRONISIERTER DIVERSITY-FUNKEMPFÄNGER

DISPOSITIF DE RECEPTION EN DIVERSITE SYNCHRONISE, NUMERIQUE ET SANS FIL

(84) Designated Contracting States:
**DE FR GB IT NL**

(30) Priority: **29.12.1993 US 174712
29.12.1993 US 174820**

(43) Date of publication of application:
**16.10.1996 Bulletin 1996/42**

(73) Proprietor: **ATMEL CORPORATION
San Jose, California 95131 (US)**

(72) Inventors:
• **ANVARI, Kiomars
Walnut Creek, CA 94598 (US)**
• **BAHAI, Ahmad, Shaikh c/o B.Saltzberg
Middleton, New Jersey 07748 (US)**
• **BEHTASH, Saman
Berkeley, CA 94708 (US)**
• **WINSHIP, Peter
Albany, CA 94706 (US)**

(74) Representative: **Käck, Jürgen et al
Kahler Käck Mollekopf
Patentanwälte
Vorderer Anger 239
86899 Landsberg (DE)**

(56) References cited:
| | |
|---|---|
| **EP-A- 0 482 927** | **US-A- 4 397 036** |
| **US-A- 4 584 534** | **US-A- 4 715 048** |
| **US-A- 4 873 683** | **US-A- 5 109 392** |
| **US-A- 5 128 969** | **US-A- 5 142 534** |
| **US-A- 5 214 390** | |

EP 0 737 380 B1

## Description

Technical Field

The present invention relates to a method and an apparatus for combining a plurality of complex baseband signals generated by a receiver receiving a plurality of RF encoded digital signals. and more particularly, to a receiver for receiving such wireless transmitted electromagnetic signal, in a cellular telephone system.

Background of the Invention

Wireless communication is well known in the art. Heretofore, one type of wireless communication is known as a "cellular" communication wherein each stationary unit receives and transmits signals to mobile units within its allocated geographical region, called a cell. As mobile units move from one cell to another, communication is transferred from one stationary unit in one cell to another stationary unit in another cell.

Heretofore, cellular communication is analog based and has risen in popularity. However, as a result, the airways have become increasingly crowded and the capacity of the communication system to take on new subscribers is becoming increasingly of a problem. Digital cellular communication offers an opportunity to increase the number of subscribers to operate within the cellular system.

One of the problems of a digital wireless communication system is the non-linearity of the channel. Another problem is the equalizing of the digitally encoded signals. As the digitally encoded signal is transmitted from one unit to another, through a multiplicity of data paths, the various signals arriving at the other unit can cause delay spread between the digitally encoded signals. This produces inter-symbol interference. An equalizer is a digital hardware/software apparatus which corrects inter-symbol interference between the digitally encoded signals arriving from a plurality of signal paths.

In the prior art, a number of equalization strategies is disclosed. See, for example, "BER Performances Of Mobile Radio Equalizer Using RLS Algorithm In Selective Fading Environment" by Akihiro Higashi, Hiroshi Suzuki; "Bi-Directional Equalization Technique For TDMA Communication Systems Over Land Mobile Radio Channels" by Yow-Jong, Liu, page 1458-1462, Globecom '91; and "Development Of Japanese Adaptive Equalization Technology Toward High Bit Rate Data Transmission In Land Mobile Communications" by Seiichi Sampei, page 1512-1521 IEICE Transactions, Volume E, 74, No. 6, June, 1991.

In a multi-path fading environment the signal arriving at a receiver is composed of several signals, each of which corresponds to the transmitted signal following a distinct path from the transmitter to the receiver. In a time varying channel, the multi-path combinations of the transmitted signal at the receiver produce a signal whose amplitude is time varying and experiences fading due to destructive combining of the received signals. For digital transmission, the multi-path fading of the channel results in substantially larger average values of the Bit Error Rate (BER) when compared to a non-faded channel operating at the same average Signal to Noise Ratio (SNR). Therefore, to achieve a given average BER value in a fading channel the required SNR value is substantially higher than that required in a non-faded channel.

In environments where the modulated carrier is subject to fast multi-path fading, conventional continuous time synchronization techniques cannot be performed satisfactorily. In time domain multiple access systems where each user is assigned one time slot the receiver has to perform its timing and frequency synchronization in a slot by slot basis. Frequency synchronization is usually achieved by automatic frequency control circuits which have some inherent frequency error. Therefore, the timing recovery circuit or algorithm has to accommodate some limited amount of frequency error without significant degradation in performance.

Heretofore. to reduce the effects of fading, i.e. to reduce the required SNR values for given BER targets, signal diversity at the receiver has been considered. A receiver is provided with two or more independently faded versions of the same transmitted signal. By so doing, the probability that all the faded signals suffer large attenuations simultaneously is reduced resulting in lower detection error probability.

Several timing recovery techniques have been disclosed in the prior art. They can be classified into four categories. In the first category the threshold crossings of the received baseband data signal are compared with the sampling phase. A correction of the sampling phase is initiated as a result of this comparison. The main location of the crossings is estimated and the optimum sampling instant is assumed to be halfway between these crossings. The second technique uses the spectral line at the clock frequency or multiple of this frequency. This frequency is filtered out with a narrow band filter. The third technique is the sample-derivative system. In this technique a sampled-derivation phase detector which generates an error signal during each symbol interval proportional to the time derivative of the signal at the sampling time multiplied by the signal polarity at that time is used. The sampling derivative timing recovery system attempts to set the sampling time to coincide with the peak of the signal. Finally, in the fourth technique, a bank of all pass filters is used as a timing phase detector. This technique is suitable for the signals whose frame structure contains a synchronization field.

Fast multipath fading severely degrades the average BER performance of digital land mobile radio transmission systems. In order to achieve highly reliable digital data transmission without excessively increasing both transmitter power and co-channel reuse distance, it is well known to use diversity reception.

A diversity technique requires a number of signal transmission paths, named diversity branches, all of which carry the same information but have uncorrelated multipath fadings, and a circuit to combine the received signals into one which can be decoded reliably. Depending upon the land mobile radio propagation characteristics, there are a number of methods to construct diversity branches. Generally, they are classified into the following five categories: (1) space, (2) angle, (3) polarization, (4) frequency, and (5) time diversity.

Space diversity, which has been the most widely used because it can be implemented simply and economically, comprises a single transmitting antenna and a number of receiving antennas. Space between adjacent receiving antennas is chosen so that multipath fading appearing in each diversity branch becomes uncorrelated with that of the other branch.

US-A-4 715 048 discloses a prior art diversity receiving system.

Summary of the Invention

The present invention relates to a method of processing a plurality of complex baseband signals ($S_1(t)$, $S_2(t)$) where each of the signals has an associated RSSI signal ($RSSI_1$, $RSSI_2$), generated by a receiver. The receiver receives a plurality of wireless transmitted electromagnetic signals and has associated signal processing means for generating the plurality of complex baseband signals ($S_1(t)$, ($S_2(t)$) and the associated RSSI signals ($RSSI_1$, $RSSI_2$). The method comprises differentially detecting each of the complex baseband signals ($S_1(t)$, ($S_2(t)$) to produce a plurality of differential signals $RX_1$, $RX_2$ in accordance with

$$RX_1(t) = S_1(t) \cdot S_1^*(t\text{-}T)$$

and

$$RX_2(t) = S_2(t) \cdot S_2^*(t\text{-}T)$$

where $S_X^*$ is the complex conjugate of $S_X$ and T is symbol period delay. The differential signals ($RX_1(t)$, $RX_2(t)$) are combined to form a selected differential decoded signal R(t), depending upon whether the complex baseband signals ($S_1(t)$, ($S_2(t)$) have amplitude components of the associated RSSI signals ($RSSI_1$, $RSSI_2$) restored.

The selected differential decoded signal R(t) is converted to produce a plurality of converted signals $D_1(t)$ and $D_2(t)$ in accordance with:

$$D_1(t) = R(t) \cdot e^{-j2\pi fst}$$

$$D_2(t) = R(t) \cdot e^{+j2\pi fst}$$

Each of the converted signals $D_1(t)$ and $D_2(t)$ is processed to produce a timing ($\tau$) and frequency ($f_e$) error estimate signals by:

$$\tau = \frac{T}{4\pi} \cdot \arctan(C_1^*(t) \cdot C_{-1}(t))$$

$$f_e = \frac{1}{4\pi T} \cdot \arctan(C_{-1}(t) \cdot C_1(t))$$

where $C_1(t)$ and $C_{-1}(t)$ are the averages of $D_1(t)$ and $D_2(t)$ respectively.

A telecommunication receiver for achieving the foregoing method is also disclosed.

The receiver comprises an antenna for receiving the wireless transmitted electromagnetic signal and for converting the same to a radio frequency (RF) signal. The RF signal is converted into an intermediate frequency (IF) signal having an amplitude and for limiting the amplitude, and for generating a receive signal strength intensity (RSSI) signal. A bandpass converting means receives the amplitude limited IF signal and the RSSI signal. The bandpass converting means comprises means for converting the amplitude limited IF signal to a plurality of baseband signals. Each of the plurality of baseband signals is digitized at a sampling rate to produce a plurality of digitized baseband signals. The plurality of digitized baseband signals are combined to produce a complex signal S(t) in accordance with S(t)=I(t)+jQ(t) where $I^2(t)+Q^2(t)$=constant, where I,Q are the plurality of digitized baseband signals. The RSSI signal is digitized to produce a digitized RSSI signal. The digitized RSSI signal is multiplied with the complex signal to produce a complex baseband signal. The complex baseband signal is equalized by removing intersymbol interference. Finally, signals are detected in the complex baseband signal.

Brief Description of the Drawings

Figure 1 is a block level diagram of one embodiment of a wireless digital receiver, having a single antenna, to receive the transmitted electromagnetic signal and using an equalizer to eliminate intersymbol interference.

Figure 2 is a block level diagram of another embodiment of a wireless digital receiver having a plurality of spaced-apart antennas to receive the transmitted electromagnetic signal and combining the processed signals to eliminate flat fading.

Figure 3 is a block level diagram of an intermediate frequency (IF) amplitude limited amplifier which can be used in the receivers shown in Figures 1 and 2, to produce an amplitude limited IF signal and an RSSI signal.

Figure 4 is one embodiment of a bandpass to complex low pass converter which can be used in the receivers shown in Figures 1 and 2.

Figure 5 is a detailed block diagram of another embodiment of a bandpass to complex low pass convener which can be used in the receivers shown in Figures 1 and 2.

Figure 6 is a detailed block diagram of the sub-harmonic down conversion portion of the circuit for the embodiment of the bandpass to complex low pass converter shown in Figure 5.

Figure 7 is a detailed block diagram of the symbol detector which can be used in the receivers shown in Figures 1 and 2.

Figure 8 is a detailed block diagram of the diversity combiner used in the receiver shown in Figure 2.

Figure 9A is a detailed block diagram of one embodiment of the diversity and non-linear function circuit portion of the combiner shown in Figure 8.

Figure 9B is a detailed block diagram of another embodiment of the diversity and non-linear function circuit portion of the combiner shown in Figure 8.

Figure 10 is a detailed block diagram of the down converter shown in Figure 8.

Figure 11 is a detailed block diagram of the estimator shown in Figure 8.

Figure 12 is a detailed block diagram of the differential detector shown in Figure 9A or 9B.

Detailed Description of the Drawings

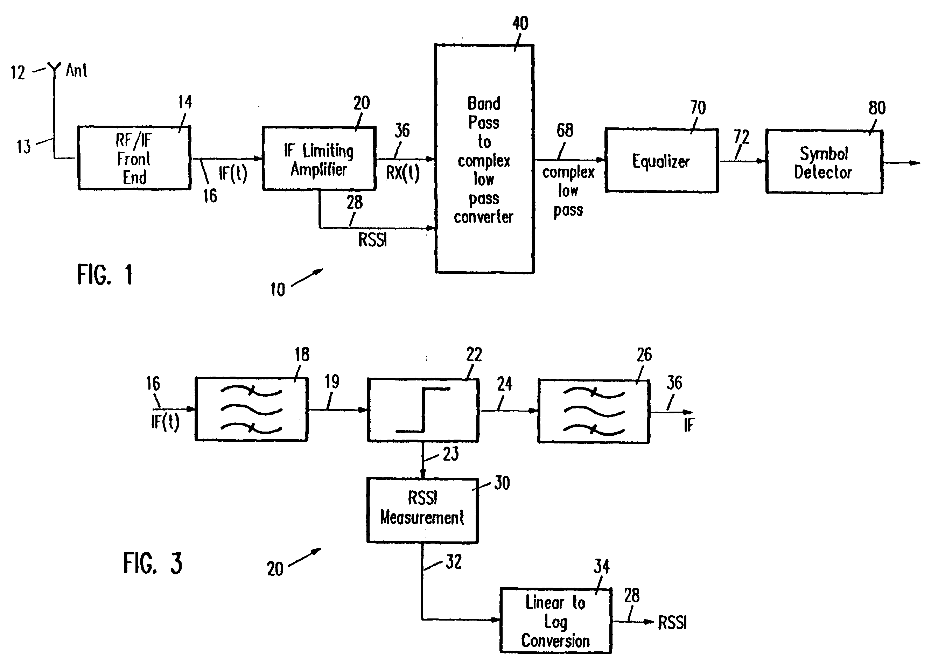

Referring to Figure 1 there is shown a schematic block level diagram of a digital receiver 10. In a wireless communication system between a mobile unit and a stationary unit, the digital receiver 10 can be a portion of a mobile unit or a portion of the stationary unit. More particularly, as will be appreciated by those having ordinary skill in the art, the stationary unit would comprise additional units to accomplish functions such as hands off and the ability to process many remote units at the same time. In the preferred embodiment, the digital receiver 10 receives wireless electromagnetic radiation signals in the radio frequency band to effectuate digital cellular communication.

The digital receiver 10 in the embodiment shown in Figure 1, comprises a single antenna 12 which receives the RF (radio frequency) wireless signal 13. The RF signal 13 is then processed by an RF processing unit 14, which converts the RF signal 13 into an intermediate frequency (IF) signal 16. The RF processing unit 14 which converts the RF signal into an IF signal 16 is well known in the art.

The IF signal 16 is supplied to an amplifier 20 which generates an amplitude limited, amplified IF signal RX(t) 36. In addition, the amplifier 20 generates a receive signal strength intensity (RSSI(t)) signal 28, which also varies with time, because it follows the envelope of the received signal.

The amplitude limited RX(t) signal 36 and the RSSI signal 28 are passed to a bandpass to complex low pass converter 40. The converter 40 serves to receive the amplitude limited signal RX(t) 36 and the RSSI signal 28 and to convert them into a complex baseband signal 68.

The complex baseband signal 68 is supplied to an equalizer 70. The equalizer 70 removes intersymbol interference in the complex baseband signal 68 when the channel is experiencing delay dispersion. The output signal of the equalizer 70 after the intersymbol interferences are removed is then supplied to a symbol detector 80 for detecting the received symbols in the digital stream.

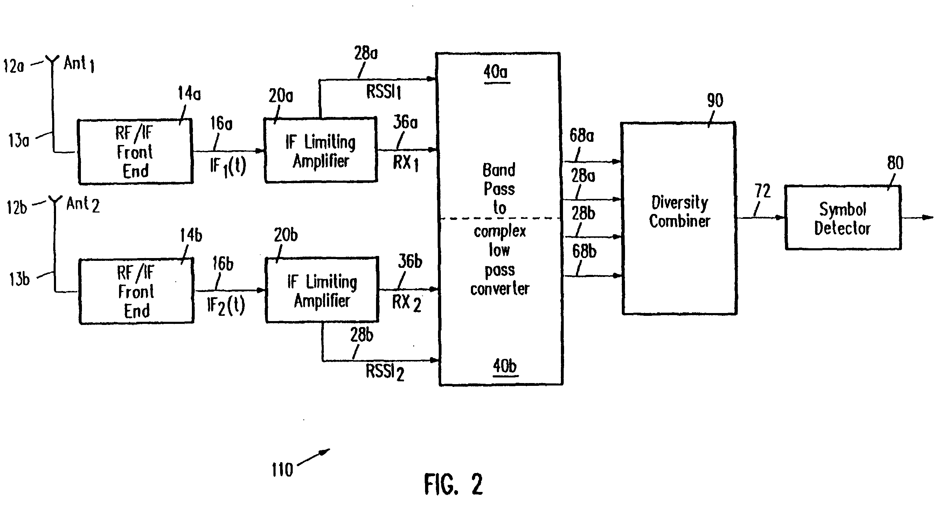

Referring to Figure 2 there is shown another embodiment of a receiver 110. The receiver 110 shown in Figure 2 is a space diversity receiver and is almost identical to the receiver shown in Figure 1. The receiver 110 has a plurality of antennas (in this case two are used) to achieve space diversity. The plurality of spaced apart antennas 12a and 12b serve to detect simultaneously the RF transmitted signal. Thus, there are two signal channels for the processing of the two received RF signals 12a and 12b. In the first channel, a first antenna 12a receives the wireless transmitted signal and converts it into a first RF signal 13a. An RF processing unit 14a receives the first RF signal 13a and generates a first $IF_1(t)$ signal 16a in response. The first RF processing unit 14a is substantially identical to the RF processing unit 14 shown in Figure 1 and is well known in the art.

The first $IF_1(t)$ signal 16a in the first channel is supplied to a first IF amplifier 20a which generates an amplitude limited amplified IF signal $RX_1(t)$ 36a, and a first $RSSI_1$ signal 28a. The first amplifier 20a is substantially similar to the amplifier 20 shown in Figure 1. The first amplitude limited IF signal $RX_1(t)$ 36a and the first $RSSI_1$ signal 28a are supplied to a bandpass to complex low pass convener 40a. The bandpass to complex low pass converter 40a generates a first complex baseband signal 68a. The bandpass to complex low pass converter 40a is substantially identical to the bandpass to complex low pass converter 40 shown in Figure 1.

In the second channel, the second antenna 12b receives the same electromagnetic signal in the radio frequency spectrum and converts it into a second RF signal 13b. The second RF signal 13b is supplied to a second RF processing unit 14b to generate a second $IF_2(t)$ signal 16b.

The second IF signal $IF_2(t)$ 16b in the second channel is supplied to a second IF amplifier 20b which generates a second amplitude limited amplified IF signal $RX_2(t)$ 36b, and a second RSSI signal $RSSI_2$ 28b. The second amplifier 20b is substantially similar to the amplifier 20 shown in Figure 1. The second amplitude limited IF signal $RX_2(t)$ 36b and the second $RSSI_2$ signal 28b are supplied to a second channel of a bandpass to complex low pass converter 40b. The bandpass to complex low pass converter 40b generates a second complex baseband signal 68b. The bandpass to complex low pass converter 40b is substantially identical to the bandpass to complex low pass converter 40 shown in Figure 1.

The first complex baseband signal 68a and the second complex baseband signal 68b are supplied to a diversity combiner 90. Since a plurality of spaced apart antennas are used to receive a plurality of RF signals 12a and 12b to achieve space diversity, the two channels of complex baseband signals 68a and 68b are combined by a diversity combiner 90 to generate a single output signal eliminating flat fading. This signal is then supplied to the symbol detector 80. The symbol detector 80 is substantially identical to the symbol detector 80 shown in Figure 1. The symbol detector 80 detects the symbols from the digital signal supplied as input thereto.

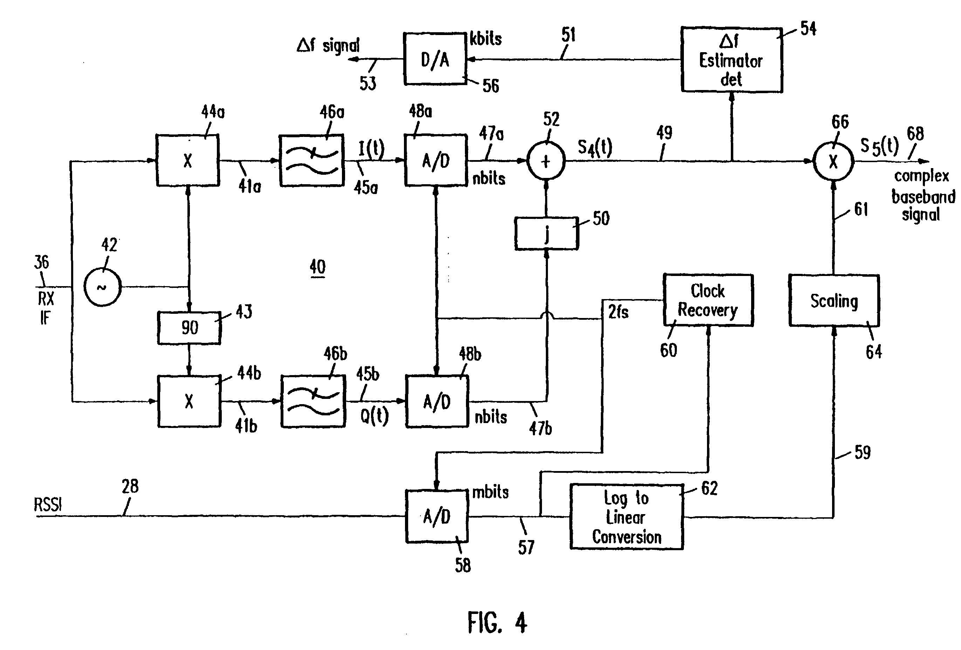

Referring to Figure 3 there is shown a block level diagram of the IF amplifier 20 used in the receiver 10 or 110. The IF limiting amplifier 20 receives the IF signal 16 and supplies it through a first bandpass filter 18. The first bandpass filter 18 provides match filtering for the IF signal 16 to minimize any intersymbol interference. It also provides the selectivity for rejecting any unwanted signal. The first bandpass filter 18 generates a first IF filtered signal 19.

The first IF filtered signal 19 is supplied to a limiting amplifier 22 which acts almost like an instant automatic gain control amplifier. The amplifier 22 removes any amplitude fluctuation in the first IF filtered signal 19 and produces an amplified IF signal 24 as its output. Mathematically, the amplified IF signal $S_2(t)$ 24 is related to the first filtered IF signal $S_1(t)$ 19 in the following manner:

$$S_2(t) = \frac{S_1(t)}{|S_1(t)|}$$

Thus, the amplified IF signal $S_2(t)$ 24 is a vector signal with a constant magnitude and a phase that changes according to the input modulating IF filtered signal $S_1(t)$ 19. The amplified IF signal 24 results in spectrum regrowth and spreading.

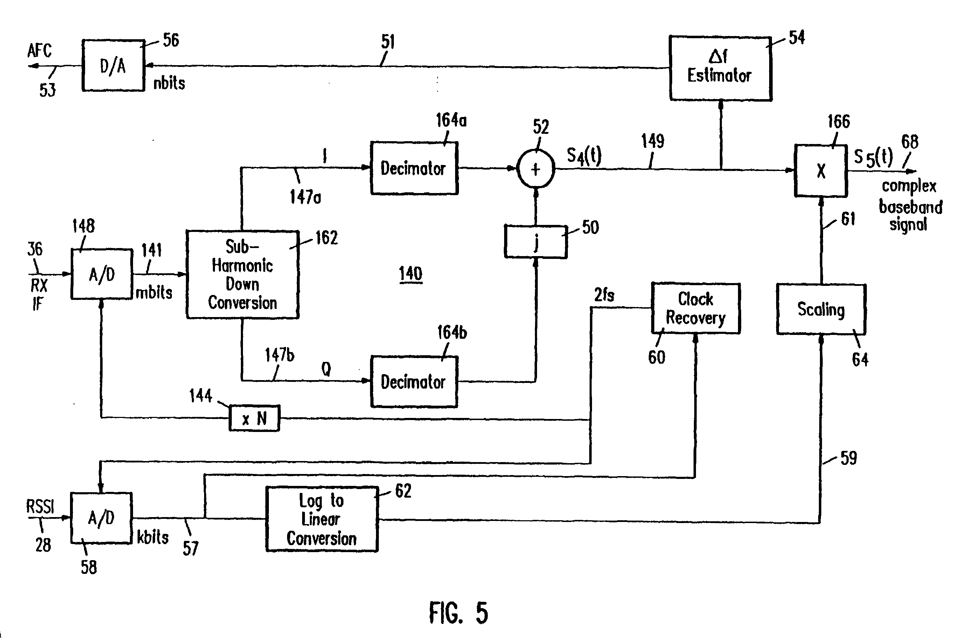

Finally, the amplified IF signal 24 is supplied to a band pass filter 26. The band pass filter 26 confines the IF signal 24 in a manageable bandwidth, depending on the number of samples used in the analog to digital converter 48a and 48b of Figure 4 or AID converter 148 and 48 of Figure 5, as explained hereinafter.

The amplifier 22 also supplies an RSSI signal 23 which is supplied to an RSSI measurement circuit 30. The RSSI measurement circuit 30 generates an RSSI signal 32 which is proportional to the envelope of the IF signal 19 supplied to the amplifier 22. The RSSI signal 32 is then converted by a linear to log conversion circuit 34 into a log RSSI signal 28, to reduce the requirement for the dynamic range of the analog-to-digital converter 58. which is used to digitize the RSSI signal (as discussed hereinafter). The log RSSI signal 28 continues to maintain the envelope information of the IF signal 19 but in logarithmic format. In contrast, the amplitude limited IF amplified signal 36 will no longer have any envelope information.

Referring to Figure 4 there is shown one embodiment of the bandpass to complex low pass converter 40. The converter 40 shown in Figure 4 is a quadrature demodulator which is used to convert the IF signal 36 to a complex baseband signal 68. The manner in which this is accomplished is as follows. The IF signal 36 is first demodulated. A carrier signal at the reference IF frequency is generated by a generator 42. The carrier signal is supplied to a first multiplier 44a to which the IF signal 36 is also supplied to demodulate the IF signal 36 to produce a first demodulated IF signal 41a. The first IF demodulated signal 41a is filtered by a first low pass filter 46a to produce a first real baseband signal I(t) 45a. The baseband signal I(t) 45a is then digitized by a first analog-to-digital digitizer 48a to produce a digitized I(t) signal 47a.

The IF signal 36 is also supplied to a second multiplier 44b. The carrier signal generating the reference IF frequency from the generator 42 has its phase shifted by 90° by phase shifter 43. The phase shifted carrier signal is then supplied to the second multiplier 44b which produces a second IF demodulated signal 41b, which is filtered by a low pass filter 46b to produce a filtered real baseband signal Q(t) 45b. The real baseband Q(t) signal 45b is then digitized by a second A/D converter 48b, sampling at the same sampling rate as that for the first A/D converter 48a, based upon a clock signal from the clock 60, to produce a digitized real Q signal 47b. Each of the real I and Q digitized signals 47a and 47b comprises a digital sample signal having n bits. The real Q digitized signal 47b is then multiplied by the imaginary vector j by multiplier 50. The signal is then supplied to an adder 52 which generates the complex baseband signal $S_4(t)$ 49 which is:

$$S_4(t) = I(t) + jQ(t) \quad I^2(t) + Q^2(t) = \text{constant}$$

The complex signal 49 contains the phase of the IF signal 28 but does not carry any amplitude information. The complex signal 49 is then supplied to a frequency difference estimate detector 54. The frequency difference estimate detector 54 generates a frequency difference signal 51 which is then converted into an analog signal by a D/A converter 56. The difference frequency signal 53 is then used for automatic frequency control.

The RSSI signal 28 is supplied to a third A/D converter 58 which operates at the same sampling rate as the rate from the clock 60 supplied to the first and second A/D converters 48a and 48b respectively. The first, second, and third A/D converters 47a, 47b and 58 respectively are sampled by a clock signal from the clock 60 at greater than equal to twice the expected symbol rate. The digitized RSSI signal 57, comprising m bits which is the output of the third A/D converter 58, can be used to adjust the clock 60. In addition, the digitized log RSSI signal 57 is supplied to a log to linear converter 62 which converts the digitized RSSI signal 57 back to a linear digital RSSI signal 59. The linear digitized RSSI signal 59 is then scaled by a scaling circuit 54, if needed, generating a scaled digitized RSSI signal 61. The scaled digitized RSSI signal 61 is supplied to a multiplier 66 to which the complex baseband signal $S_4$(t) 49 is also supplied and is combined in the following manner:

$$S_5(t) = S_4(t) \times RSSI$$

To form the linear complex baseband signal 68.

The converter 40 as described hereinabove and as shown in Figure 4 can be used in the receiver 10 shown in Figure 1 or in each of the channels in the receiver 110 showing Figure 2.

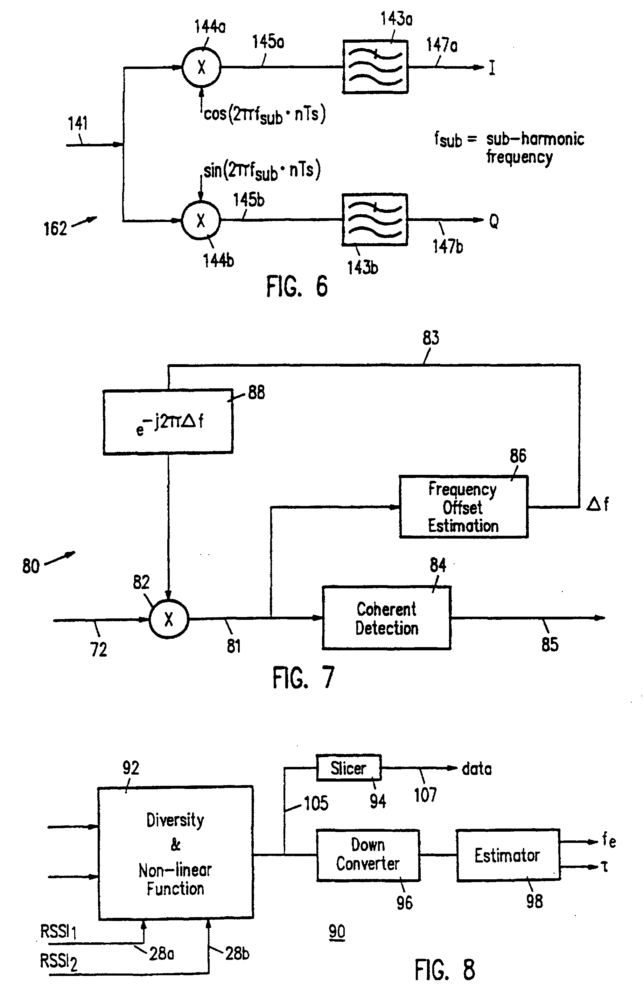

Referring to Figure 5 there is shown another embodiment of a converter 140 which can be used in the receiver 10 shown in Figure 1 or each of the two channels of the receiver 110 shown in Figure 2. The converter 140 shown in Figure 5 is similar to the converter 40 shown in Figure 4 having many of the same components. The IF signal 36, received by the converter 140, is converted into a digital signal by a first A/D converter 148. The first A/D converter 148, however, receives a clock signal from the clock 60, increased by a multiplier 144. The result is that the clock signal supplied to the A/D converter 148 samples the IF signal 36 at a rate at least 4 times the symbol rate. The rate of at least four times the symbol rate is chosen depending upon the bandwidth and the frequency of the IF signal 36. The result is a digitized IF signal 141, which is supplied to a sub-harmonic down converter 162, which is shown in Figure 6 and will be explained in greater detail hereinafter. The digitized IF signal 141, in digital format, is down converted (rather than demodulated, as in the case of an analog IF signal, in Fig. 4) to produce the baseband I and Q signals 147a and 147b, respectively. Each of the baseband signals I and Q, 147a and 147b respectively is applied to a decimator 164a and 164b, respectively, which performs the function of decimation, which decreases the number of samples per symbol. Lowering the number of samples per symbol decreases the processing power required. Decimation is not needed if the number of samples per symbol is the minimum required for correct processing of the signal. The output of the second decimator 164b, the real Q baseband signal is converted into an imaginary vector signal by the imaginary vector 50. The resultant signal jQ(t) from the vector 50, is supplied to an adder 52 to which the I real baseband signal has also been supplied. The output of the adder 52 is the complex baseband signal $S_4$(t) 149 which is as follows:

$$S_4(t) = I(t) + jQ(t) \quad I^2(t) + Q^2(t) = constant$$

The complex baseband signal 149 is then supplied to a multiplier 166.

The complex baseband signal 149 is also supplied to a difference frequency estimate detector 54, which produces an output signal 51 which is supplied to a D/A converter 56 which generates the difference frequency 53 used for automatic frequency control, all similar to that described in Figure 4.

The RSSI signal 28 is supplied to a second A/D converter 58 which is sampled at a sampling rate set by the clock 60. The sampling rate is greater than twice the symbol rate and therefore can be slower than the rate of sampling of the A/D converter 148. The output of the second A/D converter is a digitized RSSI signal 57. The digitized RSSI signal 57, similar to the digitized RSSI signal 57 shown in Figure 4, can be used to control the clock 60. In addition, the digitized log RSSI signal 57 is converted back to linear format by the log to linear converter 62. The resultant linear digitized RSSI signal 59 is then supplied to a sealer 64, again, if needed. Finally, the scaled, linear, digitized RSSI signal 61 is then supplied to the multiplier 166 which generates the output complex baseband signal 68.

Similar to the description for Figure 4, since the amplitude limited IF signal 36 contains only the phase of the modulating signal and does not carry any amplitude information, in order to reconstruct the complex baseband signal 68, the envelope information of the modulating signal which is contained in the RSSI signal 28 is used to restore the envelope information of the complex baseband signal 68. Furthermore, with the embodiment of the converter 140 shown in Figure 5, the converter 140 is less complex than the converter 40 shown in Figure 4. Thus, it is more suitable for integration. In addition, it eliminates some of the problems inherent with quadrature demodulators used in the embodiment of the converter 40 shown in Figure 4. Finally, gain and phase imbalance, DC offset, and carrier feed through are some of the other problems which can be avoided by sampling and digitizing the modulated IF signal 28, rather than the demodulated baseband signals.

Referring to Figure 6, there is shown one embodiment of the down converter 162 used in the converter 140. The sampled digitized IF signal 141 is supplied to a first multiplier 144a and a second multiplier 144b simultaneously. Each of the first and second multipliers 144a and 144b operates in the signal provided as follows:

$$signal\ 145a = Signal\ 141 * Cos(2\pi f_{sub}*t)$$

signal 145b = Signal 141 * Sin($2\pi f_{sub}$*t)

where $f_{sub}$ is the sub-harmonic frequency, t=nTs, where Ts is the sampling period, and n is determined by the periodicity of:

$f_{sub}$*nTs = 1; or n = 1/($f_{sub}$*Ts)

Each of the outputs of the multipliers 144a and 144b is then passed through a low pass filter 143a, and 143b, respectively, to form the baseband signals I nd Q 147a and 147b. respectively.

With respect to the receiver 10, shown in Figure 1, the complex baseband signal 68 is received by an equalizer 70. The equalizer 70 is of conventional design and is well known in the art and serves to remove any intersymbol interference, when the channel is experiencing delay dispersion. The equalizer 70 needs both the amplitude and the phase information of the complex baseband signal 68 to estimate the channel and to compensate for the dispersion. Thus, the complex baseband signal 68 is provided with the phase information by the output of the adder 52 ($S_4$(t)=I(t)+jQ(t)) and by the amplitude from the RSSI signal 36, in both the embodiments of the convener 40 and 140 shown in Figures 4 and 5. In both embodiments of the receiver 10 and 110, the output of the IF limiting amplifier 20 is an IF signal having a limit in its amplitude, thereby removing the envelope information. The envelope information, however, is contained in the RSSI signal and is restored when the digitized complex baseband signal $S_4$(t) (49 or 149) is multiplied by the RSSI signal. Once the equalizer 70 has operated upon the complex baseband signal 68, the equalized baseband signal 72 is then supplied to a symbol detector 80.

Referring to Figure 7 there is shown one embodiment of a symbol detector 80. The equalized complex baseband signal 72 from the equalizer 70 or the diversity combiner 90 is supplied to a multiplier 82 to which a signal $e^{-j2\pi\Delta f}$ is supplied from the circuit 88. This multiplication removes any frequency offset from the complex baseband signal 72. The result is a complex baseband signal 81 whose frequency offset has been removed. This signal 81 is then supplied to a frequency offset estimation circuit 86 which generates a frequency differential signal 83 or $\Delta f$. The frequency differential signal 83 $\Delta f$ is supplied to the circuit 88 which generates the signal $e^{-j2\pi\Delta f}$. In addition, the signal 81 is supplied to a coherent detector 84. The coherent detector 84 detects the symbols in the signal 81 coherently. The result of the output of the symbol detector 80 is data symbols or bits.

For the receiver 110 having space diversity, the two complex baseband signals 68a and 68b which are the outputs of the bandpass converters 40a and 40b are supplied to a diversity combiner 90. The diversity combiner 90 can be of conventional design serving to overcome flat fading. This can be diversity combining of equal gain, post-detection selection, co-phasing with and without signal-to-noise ratio weighting and switch diversity.

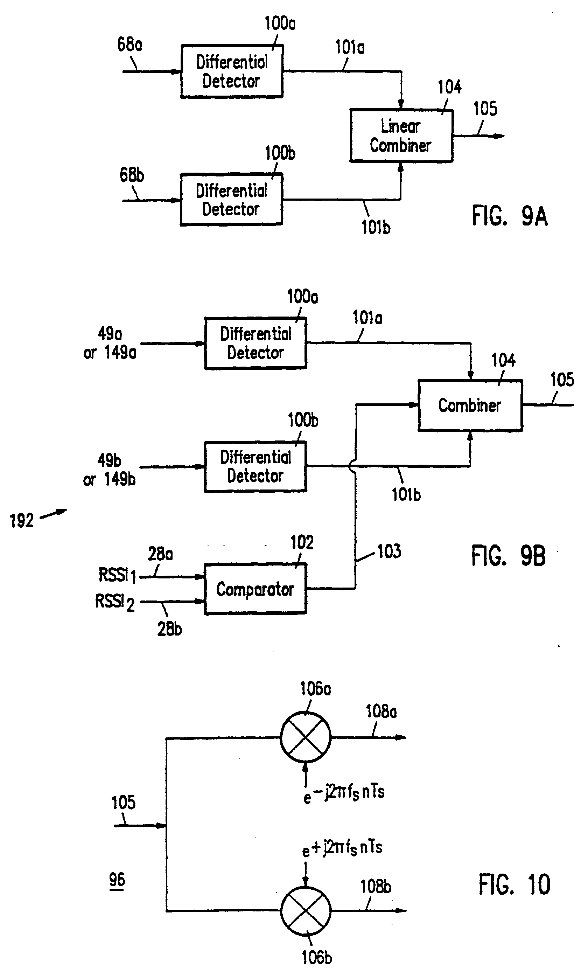

Referring to Figure 8 there is shown an embodiment of a diversity combiner 90 which can be used with the receiver 110. The diversity combiner 90 comprises a diversity and non-linear function circuit 92, which can be one of two embodiments, shown in greater detail in Figures 9A and 9B and discussed hereinafter.

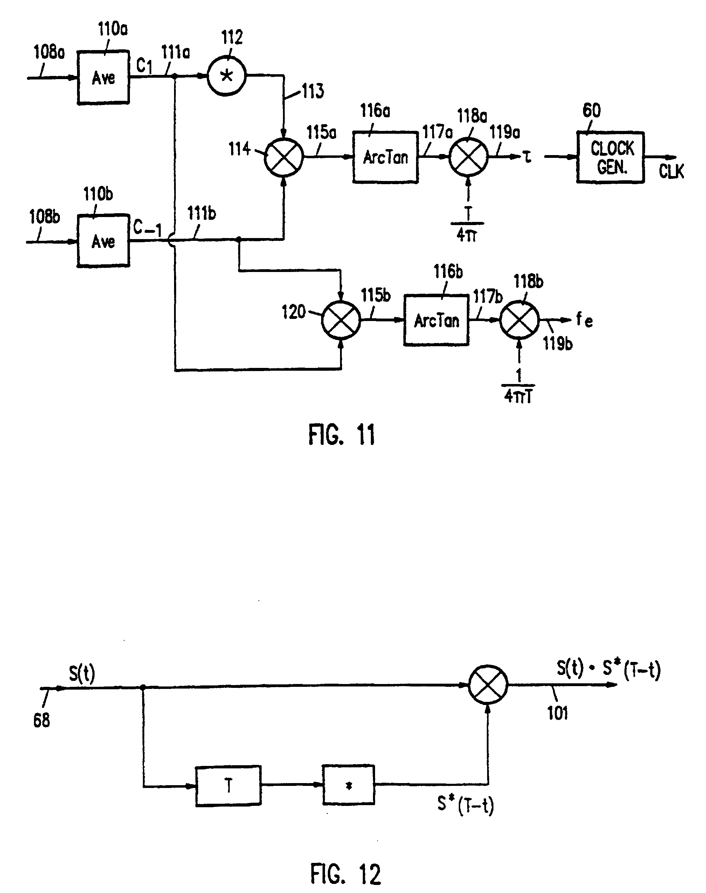

In the embodiment shown in Figure 9A, the diversity and non-linear function circuit 92 receives the complex baseband signal 68a and 68b, which already have their amplitude envelope restored by the RSSI signal. Each of the complex baseband signals 68a and 68b is supplied to a differential detector 100a and 100b respectively to generate a differential signal 101a and 101b, respectively. The differential detectors 100a and 100b are of conventional design and one such embodiment is shown in Figure 11. Each differential detector 100 receives the complex baseband signal 68 (S(t)) and generates the differential signal 101 in accordance with signal 101 = S(t) $*$ S*(t-T)

where T is a symbol delay. The differential signals 101a and 101b are supplied to a linear combiner 104, which merely adds together the two signals 101a and 101b. The output of the combiner 104 is the combined complex baseband signal 105.

Referring to Figure 9B there is shown another embodiment of the diversity and non-linear function circuit 192. The circuit 192 receives the complex baseband signal 49a and 49b or 149a and 149b, signals which do not have their amplitude envelope restored by the RSSI signal. Each of the complex baseband signals 49a and 49b or 149a and 149b is supplied to a differential detector 100a and 100b respectively to generate a differential signal 101a and 101b, respectively. The differential detectors 100a and 100b are of conventional design and one such embodiment is shown in Figure 12. Each differential detector 100 receives the complex baseband signal and generates the differential signal 101 in accordance with signal 101 = S(t) $*$ S*(t-T), where T is a symbol delay. The differential signals 101a and 101b are supplied to a combiner 104. The output of the combiner 104 is a combined complex baseband signal 105.

Since the complex baseband signals 49a and 49b or 149a and 149b do not have their amplitude envelope restored by the RSSI signal, the RSSI signals are also supplied to the circuit 192. The RSSI signals 36a and 36b associated with each complex baseband signal 49a and 49b or 149a and 149b, respectively, are supplied to a comparator 102. The comparator 102 generates a comparison signal 103 supplied to the combiner 104 to chose the combined complex signal 105 as one of the following:

    Possibility A. Complex baseband signal 101a from one of the channels.
    Possibility B. Complex baseband signal 101b from the other channel.
    Possibility C. The sum of the complex baseband signal 101a and 101b.

The manner in which the comparator 102 generates the comparison signal 103 which selects the particular signal from the combiner 104 is as follows:

    If $RSSI_1 - RSSI_2 > 5dB$ choose signal 101a
    If $RSSI_2 - RSSI_1 > 5dB$ choose signal 101b
    If $|RSSI_1 - RSSI_2| < 5db$ choose signal 101a plus 101b

The combined complex baseband signal 105, from either the circuit 92 or the circuit 192, is then supplied to a slicer 94 which looks at the phase of its input signal and establishes which quadrant it is in, to generate the data signal 107. The slicer 94 is well known in the art.

The combined complex baseband signal 105 is also supplied to a down converter 96, shown in Figure 10. The converter 96 receives the combined complex baseband signal 105 and supplies it to two multipliers 106a and 106b simultaneously. Each of the multipliers 106a and 106b is supplied with the signal $e^{-j2\pi fst}$ and $e^{+j2\pi fst}$, respectively, with the parameters fs, and t, all as previously discussed. The output of the multipliers 106a and 106b are the signals 108a and 108b, respectively. The function of the down converter is to complex demodulate the component of interest to a DC level.

The two component signals 108a and 108b are supplied to signal averagers 110a and 110b, respectively, generating a first average signal 111a and a second average signal 111b. The first average signal 111a is converted into a complex conjugate signal by the complex operator 112, to generate a first complex signal 113. The first complex signal 113 and the second average signal 111b are supplied to a multiplier 114 which generates a first multiplied signal 115a. The first multiplied signal 115 is operated upon by the arctangent operator 116a to generate a first arctangent signal 117a. The first arctangent signal 117a is supplied to a second multiplier 118a which multiplies the first arctangent signal 117a by the factor

$$\frac{T}{4\pi}$$

to produce the timing error signal $\tau$ 119a. The timing error signal $\tau$ 119a is supplied to a clock generator 60 to adjust the sampling phase of the clock signal CLK, generated by the clock generator 60.

The first average signal 111a and the second average signal 111b are supplied to a second multiplier 120 which produces a second multiplied signal 115b. The second multiplied signal 115b is operated upon by a second arctangent operator 116b to generate a second arctangent signal 117b. The second arctangent signal 117b is supplied to a fourth multiplier 118b to which the term

$$\frac{1}{4\pi T}$$

is also supplied. The result of the operation by the fourth multiplier 118b is the frequency error signal $f_e$ 119b. The frequency error signal $f_e$ 119b is convened by a digital-to-analog converter (not shown), to produce an AFC (Automatic Frequency Control) signal to adjust the frequency of the receiver 10.

In the preferred embodiment, the foregoing description is implemented by a digital signal processor executing appropriate software. In addition, the receiver 10 can be used to detect both analog FM and digital modulation formats such as FSK, CPFSK, and DPSK.

## Claims

1. A method of processing a plurality of complex baseband signals ($S_1(t)$, $S_2(t)$) generated by a receiver for receiving a plurality of wireless transmitted electromagnetic signals, and associated signal processing means for generating said plurality of complex baseband signals ($S_1(t)$, ($S_2(t)$), said method comprising:

    differentially detecting each of said complex baseband signals ($S_1(t)$, $S_2(t)$) to produce a plurality of differential signals ($RX_1(t)$, $RX_2(t)$) in accordance with

$$RX_1(t) = S_1(t) \cdot S_1^*(t-T),$$

and

$$RX_2(t) = S_2(t) \cdot S_2^*(t-T)$$

where $S_x^*$ is the complex conjugate of $S_x$ and T is a symbol delay;

    generating a selected differential signal R(t) from said differential signals ($RX_1(t)$, $RX_2(t)$);
    converting said selected differential signal R(t) to produce a plurality of converted signals $D_1(t)$ and $D_2(t)$ in according with

$$D_1(t) = R(t) \cdot e^{-j2\pi fst}$$

$$D_2(t) = R(t) \cdot e^{+j2\pi fst}$$

where fs is the sub-harmonic frequency, t=nTs, where Ts is the sampling period, and n is determined by the periodicity of:

$$fs*nTs = 1; \text{ or } n = 1/(fs*Ts)$$

processing said converted signals $D_1(t)$ and $D_2(t)$ to produce timing ($\tau$) and frequency ($f_e$) error estimates by:

$$\tau = \frac{T}{4\pi} \cdot \arctan (C_1^*(t) \cdot C_{-1}(t))$$

$$f_e = \frac{1}{4\pi T} \cdot \arctan (C_{-1}(t) \cdot C_1(t))$$

where $C_1(t)$ and $C_{-1}(t)$ are the averages of $D_1(t)$ and $D_2(t)$ respectively.

2. The method of Claim 1 wherein each of said plurality of complex baseband signals ($S_1(t)$, $S_2(t)$) has an associated receive signal strength-intensity signal ($RSSI_1$, $RSSI_2$), generated by said associated signal processing means of said receiver.

3. The method of Claim 2 wherein said generating step further comprises:

selecting said differential signal R(t) from said differential signals ($RX_1(t)$, $RX_2(t)$) based upon the comparing step:

when $RSSI_1 - RSSI_2 >$ first dB,

$$R(t) = RX_1(t)$$

when $RSSI_2 - RSSI_1 >$ first dB,

$$R(t) = RX_2(t)$$

when $|RSSI_1 - RSSI_2| <$ first dB,

$$R(t) = RX_1(t) + RX_2(t)$$

in the event each of said plurality of complex baseband signals ($S_1(t)$, $S_2(t)$) is an amplitude limited signal.

4. The method of Claim 3 wherein said first dB is 5.

5. The method of Claim 2 wherein said generating step further comprises:

selecting said differential signal R(t) from said differential signals ($RX_1(t)$, $RX_2(t)$) by linearly combining said differential signals ($RX_1(t)$, $RX_2(t)$) in accordance with

$$R(t) = RX_1(t) + RX_2(t)$$

in the event each of said plurality of complex baseband signals ($S_1(t)$, $S_2(t)$) has its amplitude restored by its associated receive signal strength-intensity signal ($RSSI_1$, $RSSI_2$).

6. The method of Claim 1 wherein said receiver has a plurality of spaced apart antenna means and associated signal processing means for generating simultaneously said plurality of complex baseband signals ($S_1(t)$, ($S_2(t)$).

7. A diversity combiner for use with a receiver for receiving a plurality of wireless transmitted electromagnetic signals, said receiver having associated signal processing means for generating a plurality of complex baseband signals ($S_1(t)$, $S_2(t)$), from said plurality of wireless transmitted electromagnetic signals, said diversity combiner comprising:

means for differently detecting each of said complex baseband signals ($S_1(t)$, $S_2(t)$) to produce a plurality of differential signals ($RX_1(t)$, $RX_2(t)$), in accordance with

$$RX_1(t) = S_1(t) \bullet S_1^*(t-T),$$

and

$$RX_2(t) = S_2(t) \bullet S_2^*(t-T)$$

where $S_x$ is the complex conjugate of $S_x$ and T is a symbol delay;
means for generating a selected differential signal R(t) from said differential signals ($RX_1(t)$, $RX_2(t)$);
means for converting said selected differential signal R(t) to produce a plurality of converted signals $D_1(t)$ and $D_2(t)$; in according with

$$D_1(t) = R(t) \cdot e^{-j2\pi fst}$$

$$D_2(t) = R(t) \cdot e^{+j2\pi fst}$$

where fs is the sub-harmonic frequency, t=nTs, where Ts is the sampling period, and n is determined by the periodicity of:

$$fs*nTs = 1; \text{ or } n = 1/(fs*Ts)$$

means for processing said converted signals $D_1(t)$ and $D_2(t)$ to produce timing ($\tau$) and frequency ($f_e$) error estimate signals by:

$$\tau = \frac{T}{4\pi} \cdot \arctan (C_1^*(t) \cdot C_{-1}(t))$$

$$f_e = \frac{1}{4\pi T} \cdot \arctan (C_{-1}(t) \cdot C_1(t))$$

where $C_1(t)$ and $C_{-1}(t)$ are the averages of $D_1(t)$ and $D_2(t)$ respectively.

8. The combiner of Claim 7 wherein said associated signal processing means of said receiver further comprising means for generating an associated receive signal strength-intensity signal ($RSSI_1$, $RSSI_2$) for each of said plurality of complex baseband signals ($S_1(t)$, $S_2(t)$).

9. The combiner of Claim 8 wherein said means for generating a selected differential signal R(t) from said differential signals ($RX_1(t)$, $RX_2(t)$); further comprises:

means for comparing said plurality of receive signal strength-intensity signals ($RSSI_1$, $RSSI_2$) and for selecting said selected differential signal R(t)in accordance with:

when $RSSI_1 - RSSI_2 > $ first dB,

$$R(t) = RX_1(t)$$

when $RSSI_2 - RSSI_1 > $ first dB,

$$R(t) = RX_2(t)$$

when $|RSSI_1 - RSSI_2| < $ first dB,

$$R(t) = RX_1(t) + RX_2(t)$$

in the event each of said plurality of complex baseband signals ($S_1(t)$, $S_2(t)$) is an amplitude limited signal.

10. The combiner of Claim 9 wherein said first dB is 5.

11. The combiner of Claim 8 wherein said means for generating a selected differential signal R(t) from said differential signals ($RX_1(t)$, $RX_2(t)$); further comprises:

means for linearly combining said differential signals ($RX_1(t)$, $RX_2(t)$) in accordance with

$$R(t) = RX_1(t) + RX_2(t)$$

in the event each of said plurality of complex baseband signals ($S_1(t)$, $S_2(t)$) has its amplitude restored by its associated receive signal strength-intensity signal ($RSSI_1$, $RSSI_2$).

12. The combiner of Claim 7 wherein said receiver has a plurality of spaced apart antenna means and associated signal processing means for simultaneously generating said plurality of complex baseband signals ($S_1(t)$, ($S_2(t)$).

13. A telecommunication receiver for receiving a wireless transmitted electromagnetic signal, said receiver comprising:

antenna means for receiving said wireless transmitted electromagnetic signals and for converting same to a plurality of radio frequency (RF) signals;
means for converting said plurality of RF signals into a plurality of intermediate frequency (IF) signals each having an amplitude and for limiting the amplitude of each IF signal and for generating a receive signal strength intensity (RSSI) signal associated with each IF signal;
bandpass converting means for receiving said plurality of IF signals and for producing a plurality of complex baseband signals ($S_1(t)$, $S_2(t)$), one associated with each IF signal;
diversity combiner means for receiving said plurality of complex baseband signals ($S_1(t)$, $S_2(t)$), said diversity combiner means comprising:

means for differentially detecting each of said complex baseband signals ($S_1(t)$, $S_2(t)$) to produce a plurality of differential signals ($RX_1(t)$, $RX_2(t)$), in accordance with

$$RX_1(t) = S_1(t) \cdot S_1^*(t-T),$$

and

$$RX_2(t) = S_2(t) \cdot S_2^*(t-T)$$

where $S_x^*$ is the complex conjugate of $S_x$ and T is a symbol delay;

means for generating a selected differential signal R(t) from said differential signals $(RX_1(t), RX_2(t))$;

means for converting said selected differential signal R(t) to produce a plurality of converted signals $D_1(t)$ and $D_2(t)$ in according with

$$D_1(t) = R(t) \cdot e^{-j2\pi fst}$$

$$D_2(t) = R(t) \cdot e^{+j2\pi fst}$$

where fs is the sub-harmonic frequency, t=nTs, where Ts is the sampling period, and n is determined by the periodicity of:

$$fs*nTs = 1; \text{ or } n = 1/(fs*Ts)$$

means for processing said converted signals $D_1(t)$ and $D_2(t)$ to produce timing ($\tau$) and frequency ($f_e$) error estimates by:

$$\tau = \frac{T}{4\pi} \cdot \text{arc tan } (C_1^*(t) \cdot C_{-1}(t))$$

$$f_e = \frac{1}{4\pi T} \cdot \text{arc tan } (C_{-1}(t) \cdot C_1(t))$$

where $C_1(t)$ and $C_{-1}(t)$ are the averages of $D_1(t)$ and $D_2(t)$ respectively; and

means for receiving said timing ($\tau$) and frequency ($f_e$) error estimate signals and for detecting symbols in said selected differential signal R(t).

14. The receiver of Claim 13 wherein said band pass converting means of said receiver further comprising means for generating an associated receive signal strength-intensity signal ($RSSI_1$, $RSSI_2$) for each of said plurality of complex baseband signals $(S_1(t), S_2(t))$.

15. The receiver of Claim 14 wherein said means for generating a selected differential signal R(t) from said differential signals $(RX_1(t), RX_2(t))$; further comprises:

means for comparing said plurality of receive signal strength-intensity signals ($RSSI_1$, $RSSI_2$) and for selecting said selected differential signal R(t)in accordance with:

when $RSSI_1 - RSSI_2 >$ first dB,

$$R(t) = RX_1(t)$$

when $RSSI_2 - RSSI_1 >$ first dB,

$$R(t) = RX_2(t)$$

when $|RSSI_1 - RSSI_2| <$ first dB,

$$R(t) = RX_1(t) + RX_2(t)$$

in the event each of said plurality of complex baseband signals $(S_1(t), S_2(t))$ is an amplitude limited signal.

16. The combiner of Claim 15 wherein said first dB is 5.

17. The combiner of Claim 14 wherein said means for generating a selected differential signal R(t) from said differential signals $(RX_1(t), RX_2(t))$; further comprises:

means for linearly combining said differential signals $(RX_1(t), RX_2(t))$ in accordance with

$$R(t) = RX_1(t) + RX_2(t)$$

in the event each of said plurality of complex baseband signals $(S_1(t), S_2(t))$ has its amplitude restored by its associated receive signal strength-intensity signal ($RSSI_1$, $RSSI_2$).

18. The combiner of Claim 13 wherein said antenna means comprises a plurality of spaced apart antennas and said band pass converting means for simultaneously generating said plurality of complex baseband signals $(S_1(t), (S_2(t))$.

**Patentansprüche**

1. Verfahren zum Verarbeiten einer Vielzahl von komplexen Basisbandsignalen $(S_1(t), S_2(t))$, die von einem Empfänger zum Empfangen einer Vielzahl von drahtlos übertragenen elektromagnetischen Signalen und einem zugehörigen Signalverarbeitungsmittel zum Erzeugen der Vielzahl von komplexen Basisbandsignalen $(S_1(t), S_2(t))$ erzeugt werden, wobei das Verfahren umfasst:

differentielles Erfassen von jedem der komplexen Basisbandsignale $(S_1(t), S_2(t))$, um eine Vielzahl von Differenzsignalen $(RX_1(t), RX_2(t))$ gemäß

$$RX_1(t) = S_1(t) \cdot S_1^*(t-T)$$

und

$$RX_2(t) = S_2(t) \cdot S_2^*(t-T)$$

zu erzeugen, wobei $S_x^*$ das konjugiert komplexe von $S_x$ ist und T eine Symbolverzögerung ist; Erzeugen eines ausgewählten Differenzsignals R(t) aus den Differenzsignalen ($RX_1(t)$, $RX_2(t)$);

Umwandeln des ausgewählten Differenzsignals R(t), um eine Vielzahl von umgewandelten Signalen $D_1(t)$ und $D_2(t)$ zu erzeugen, gemäß

$$D_1(t) = R(t) \cdot e^{-j2\pi fst}$$

$$D_2(t) = R(t) \cdot e^{+j2\pi fst}$$

wobei fs die subharmonische Frequenz ist, t=nTs, wobei Ts die Abtastperiode ist und n durch die Periodizität von:

$$fs*nTs = 1; \text{ oder } n = 1/(fs*Ts)$$

festgelegt ist,

Verarbeiten der umgewandelten Signale $D_1(t)$ und $D_2(t)$, um Fehlerabschätzungen der Zeitsteuerung ($\tau$) und der Frequenz ($f_e$) zu erzeugen, durch:

$$\tau = \frac{T}{4\pi} \cdot \text{arc tan } (C_1^*(t) \cdot C_{-1}(t))$$

$$f_e = \frac{1}{4\pi T} \cdot \text{arc tan } (C_{-1}(t) \cdot C_1(t))$$

wobei $C_1(t)$ und $C_{-1}(t)$ die Mittelwerte von $D_1(t)$ bzw. $D_2(t)$ sind.

2. Verfahren nach Anspruch 1, wobei jedes der Vielzahl von komplexen Basisbandsignalen ($S_1(t)$, $S_2(t)$) ein zugehöriges Empfangssignalstärke-Intensitäts-Signal ($RSSI_1$, $RSSI_2$) aufweist, das durch das zugehörige Signalverarbeitungsmittel des Empfängers erzeugt wird.

3. Verfahren nach Anspruch 2, wobei der Erzeugungsschritt ferner umfasst:

Auswählen des Differenzsignals R(t) aus den Differenzsignalen ($RX_1(t)$, $RX_2(t)$) auf der Basis

des Vergleichsschritts:

wenn $RSSI_1 - RSSI_2 >$ erstes dB

$$R(t) = RX_1(t)$$

wenn $RSSI_2 - RSSI_1 >$ erstes dB

$$R(t) = RX_2(t)$$

wenn $|RSSI_1 - RSSI_2| <$ erstes dB

$$R(t) = RX_1(t) + RX_2(t)$$

im Fall, dass jedes der Vielzahl von komplexen Basisbandsignalen ($S_1(t)$, $S_2(t)$) ein amplitudenbegrenztes Signal ist.

4. Verfahren nach Anspruch 3, wobei das erste dB 5 ist.

5. Verfahren nach Anspruch 2, wobei der Erzeugungsschritt ferner umfasst:

Auswählen des Differenzsignals R(t) aus den Differenzsignalen ($RX_1(t)$, $RX_2(t)$) durch lineares Kombinieren der Differenzsignale ($RX_1(t)$, $RX_2(t)$) gemäß

$$R(t) = RX_1(t) + RX_2(t)$$

im Fall, dass die Amplitude von jedem der Vielzahl von komplexen Basisbandsignalen ($S_1(t)$, $S_2(t)$) durch sein zugehöriges Empfangssignalstärke-Intensitäts-Signal ($RSSI_1$, $RSSI_2$) wiederhergestellt wird.

6. Verfahren nach Anspruch 1, wobei der Empfänger eine Vielzahl von beabstandeten Antennenmitteln und ein zugehöriges Signalverarbeitungsmittel zum gleichzeitigen Erzeugen der Vielzahl von komplexen Basisbandsignalen ($S_1(t)$, $S_2(t)$) aufweist.

7. Diversitykombinator zur Verwendung mit einem Empfänger zum Empfangen einer Vielzahl von drahtlos übertragenen elektromagnetischen Signalen, wobei dem Empfänger ein Signalverarbeitungsmittel zum Erzeugen einer Vielzahl von komplexen Basisbandsignalen ($S_1(t)$, $S_2(t)$) aus der Vielzahl von drahtlos übertragenen elektromagnetischen Signalen zugeordnet ist, wobei der Diversitykombinator umfasst:

ein Mittel zum differentiellen Erfassen von je-

dem der komplexen Basisbandsignale ($S_1(t)$, $S_2(t)$), um eine Vielzahl von Differenzsignalen ($RX_1(t)$, $RX_2(t)$) gemäß

$$RX_1(t) = S_1(t) \cdot S_1{}^*(t-T)$$

und

$$RX_2(t) = S_2(t) \cdot S_2{}^*(t-T)$$

zu erzeugen, wobei $S_x{}^*$ das konjugiert komplexe von $S_x$ ist und T eine Symbolverzögerung ist; ein Mittel zum Erzeugen eines ausgewählten Differenzsignals R(t) aus den Differenzsignalen ($RX_1(t)$, $RX_2(t)$); ein Mittel zum Umwandeln des ausgewählten Differenzsignals R(t), um eine Vielzahl von umgewandelten Signalen $D_1(t)$ und $D_2(t)$ zu erzeugen, gemäß

$$D_1(t) = R(t) \cdot e^{-j2\pi fst}$$

$$D_2(t) = R(t) \cdot e^{+j2\pi fst}$$

wobei fs die subharmonische Frequenz ist, t=nTs, wobei Ts die Abtastperiode ist und n durch die Periodizität von:

$$fs^*nTs = 1; \text{ oder } n = 1/(fs^*Ts)$$

festgelegt ist, ein Mittel zum Verarbeiten der umgewandelten Signale $D_1(t)$ und $D_2(t)$, um Fehlerabschätzungssignale der Zeitsteuerung ($\tau$) und der Frequenz ($f_e$) zu erzeugen, durch:

$$\tau = \frac{T}{4\pi} \cdot \text{arc tan } (C_1{}^*(t) \cdot C_{-1}(t))$$

$$f_e = \frac{1}{4\pi T} \cdot \text{arc tan } (C_{-1}(t) \cdot C_1(t))$$

wobei $C_1(t)$ und $C_{-1}(t)$ die Mittelwerte von $D_1(t)$ bzw. $D_2(t)$ sind.

8. Kombinator nach Anspruch 7, wobei das zugehörige Signalverarbeitungsmittel des Empfängers ferner ein Mittel zum Erzeugen eines zugehörigen Empfangssignalstärke-Intensitäts-Signals ($RSSI_1$, $RSSI_2$) für jedes der Vielzahl von komplexen Basisbandsignalen ($S_1(t)$, $S_2(t)$) umfasst.

9. Kombinator nach Anspruch 8, wobei das Mittel zum Erzeugen eines ausgewählten Differenzsignals R(t) aus den Differenzsignalen ($RX_1(t)$, $RX_2(t)$) ferner umfasst:

ein Mittel zum Vergleichen der Vielzahl von Empfangssignalstärke-Intensitäts-Signalen ($RSSI_1$, $RSSI_2$) und zum Auswählen des ausgewählten Differenzsignals R(t) gemäß:

wenn $RSSI_1 - RSSI_2 >$ erstes dB

$$R(t) = RX_1(t)$$

wenn $RSSI_2 - RSSI_1 >$ erstes dB

$$R(t) = RX_2(t)$$

wenn $|RSSI_1 - RSSI_2| <$ erstes dB

$$R(t) = RX_1(t) + RX_2(t)$$

im Fall, dass jedes der Vielzahl von komplexen Basisbandsignalen ($S_1(t)$, $S_2(t)$) ein amplitudenbegrenztes Signal ist.

10. Kombinator nach Anspruch 9, wobei das erste dB 5 ist.

11. Kombinator nach Anspruch 8, wobei das Mittel zum Erzeugen eines ausgewählten Differenzsignals R(t) aus den Differenzsignalen ($RX_1(t)$, $RX_2(t)$) ferner umfasst:

ein Mittel zum linearen Kombinieren der Differenzsignale ($RX_1(t)$, $RX_2(t)$) gemäß

$$R(t) = RX_1(t) + RX_2(t)$$

im Fall, dass die Amplitude von jedem der Vielzahl von komplexen Basisbandsignalen ($S_1(t)$, $S_2(t)$) durch sein zugehöriges Empfangssignalstärke-Intensitäts-Signal ($RSSI_1$, $RSSI_2$) wiederhergestellt wird.

12. Kombinator nach Anspruch 7, wobei der Empfänger eine Vielzahl von beabstandeten Antennenmitteln und ein zugehöriges Signalverarbeitungsmittel zum gleichzeitigen Erzeugen der Vielzahl von komplexen Basisbandsignalen ($S_1(t)$, $S_2(t)$) aufweist.

13. Telekommunikationsempfänger zum Empfangen eines drahtlos übertragenen elektromagnetischen Signals, wobei der Empfänger umfasst:

ein Antennenmittel zum Empfangen der drahtlos übertragenen elektromagnetischen Signale und zum Umwandeln derselben in eine Vielzahl von Radiofrequenz- (RF) Signalen;

ein Mittel zum Umwandeln der Vielzahl von RF-Signalen in eine Vielzahl von Zwischenfrequenz- (IF) Signalen jeweils mit einer Amplitude und zum Begrenzen der Amplitude von jedem IF-Signal und zum Erzeugen eines Empfangssignalstärke-Intensitäts- (RSSI) Signals, das jedem IF-Signal zugeordnet ist;

ein Bandpass-Umwandlungsmittel zum Empfangen der Vielzahl von IF-Signalen und zum Erzeugen einer Vielzahl von komplexen Basisbandsignalen ($S_1(t)$, $S_2(t)$), wobei eines jedem IF-Signal zugeordnet ist;

ein Diversitykombinatormittel zum Empfangen der Vielzahl von komplexen Basisbandsignalen ($S_1(t)$, $S_2(t)$),

wobei das Diversitykombinatormittel umfasst:

ein Mittel zum differentiellen Erfassen von jedem der komplexen Basisbandsignale ($S_1(t)$, $S_2(t)$), um eine Vielzahl von Differenzsignalen ($RX_1(t)$, $RX_2(t)$) gemäß

$$RX_1(t) = S_1(t) \cdot S_1{}^*(t\text{-}T)$$

und

$$RX_2(t) = S_2(t) \cdot S_2{}^*(t\text{-}T)$$

zu erzeugen, wobei $S_x{}^*$ das konjugiert komplexe von $S_x$ ist und T eine Symbolverzögerung ist; ein Mittel zum Erzeugen eines ausgewählten Differenzsignals R(t) aus den Differenzsignalen ($RX_1(t)$, $RX_2(t)$); ein Mittel zum Umwandeln des ausgewählten Differenzsignals R(t), um eine Vielzahl von umgewandelten Signalen $D_1(t)$ und $D_2(t)$ zu erzeugen, gemäß

$$D_1(t) = R(t) \cdot e^{-j2\pi fst}$$

$$D_2(t) = R(t) \cdot e^{+j2\pi fst}$$

wobei fs die subharmonische Frequenz ist, t=nTs, wobei Ts die Abtastperiode ist und n durch die Periodizität von:

$$fs*nTs = 1; \text{ oder } n = 1/(fs*Ts)$$

festgelegt ist,

ein Mittel zum Verarbeiten der umgewandelten Signale $D_1(t)$ und $D_2(t)$, um Fehlerabschätzungen der Zeitsteuerung ($\tau$) und der Frequenz ($f_e$) zu erzeugen, durch:

$$\tau = \frac{T}{4\pi} \cdot \text{arc tan } (C_1{}^*(t) \cdot C_{-1}(t))$$

$$f_e = \frac{1}{4\pi T} \cdot \text{arc tan } (C_{-1}(t) \cdot C_1(t))$$

wobei $C_1(t)$ und $C_{-1}(t)$ die Mittelwerte von $D_1(t)$ bzw. $D_2(t)$ sind; und

ein Mittel zum Empfangen der Fehlerabschätzungssignale der Zeitsteuerung ($\tau$) und der Frequenz ($f_e$) und zum Erfassen von Symbolen in dem ausgewählten Differenzsignal R(t).

**14.** Empfänger nach Anspruch 13, wobei das Bandpass-Umwandlungsmittel des Empfängers ferner ein Mittel zum Erzeugen eines zugehörigen Empfangssignalstärke-Intensitäts-Signals ($RSSI_1$, $RSSI_2$) für jedes der Vielzahl von komplexen Basisbandsignalen ($S_1(t)$, $S_2(t)$) umfasst.

**15.** Empfänger nach Anspruch 14, wobei das Mittel zum Erzeugen eines ausgewählten Differenzsignals R(t) aus den Differenzsignalen ($RX_1(t)$, $RX_2(t)$) ferner umfasst:

ein Mittel zum Vergleichen der Vielzahl von Empfangssignalstärke-Intensitäts-Signalen ($RSSI_1$, $RSSI_2$) und zum Auswählen des ausgewählten Differenzsignals R(t) gemäß:

wenn $RSSI_1$ - $RSSI_2$ > erstes dB

$$R(t) = RX_1(t)$$

wenn $RSSI_2$ - $RSSI_1$ > erstes dB

$$R(t) = RX_2(t)$$

wenn $|RSSI_1$ - $RSSI_2|$ < erstes dB

$$R(t) = RX_1(t) + RX_2(t)$$

im Fall, dass jedes der Vielzahl von komplexen Basisbandsignalen ($S_1(t)$, $S_2(t)$) ein amplitudenbegrenztes Signal ist.

**16.** Kombinator nach Anspruch 15, wobei das erste dB 5 ist.

**17.** Kombinator nach Anspruch 14, wobei das Mittel zum Erzeugen eines ausgewählten Differenzsignals R(t) aus den Differenzsignalen (RX$_1$(t), RX$_2$(t)) ferner umfasst:

ein Mittel zum linearen Kombinieren der Differenzsignale (RX$_1$(t), RX$_2$(t)) gemäß

$$R(t) = RX_1(t) + RX_2(t)$$

im Fall, dass die Amplitude von jedem der Vielzahl von komplexen Basisbandsignalen (S$_1$(t), S$_2$(t)) durch sein zugehöriges Empfangssignalstärke-Intensitäts-Signal (RSSI$_1$, RSSI$_2$) wiederhergestellt wird.

**18.** Kombinator nach Anspruch 13, wobei das Antennenmittel eine Vielzahl von beabstandeten Antennen und das Bandpass-Umwandlungsmittel zum gleichzeitigen Erzeugen der Vielzahl von komplexen Basisbandsignalen (S$_1$(t), S$_2$(t)) umfasst.

## Revendications

**1.** Procédé de traitement d'une pluralité de signaux en bande de base complexes (S$_1$(t), S$_2$(t)) générés par un récepteur pour recevoir une pluralité de signaux électromagnétiques transmis sans fil, et un moyen de traitement du signal associé destiné à générer ladite pluralité de signaux en bande de base complexes (S$_1$(t), S$_2$(t)), ledit procédé comprenant :

la détection différentielle de chacun desdits signaux en bande de base complexes (S$_1$(t), S$_2$(t)) pour produire une pluralité de signaux différentiels (RX$_1$(t), RX$_2$(t)) conformément à

$$RX_1(t) = S_1(t) \cdot S_1^*(t-T),$$

et

$$RX_2(t) = S_2(t) \cdot S_2^*(t-T)$$

où S$_x^*$ est le conjugué complexe de S$_x$ et T est un temps de transmission ou retard de symbole,
la génération d'un signal différentiel sélectionné R(t) à partir desdits signaux différentiels (RX$_1$(t), RX$_2$(t)),
la conversion dudit signal différentiel sélectionné R(t) pour produire une pluralité de signaux convertis D$_1$(t) et D$_2$(t) conformément à

$$D_1(t) = R(t) \cdot e^{-j2\pi fst}$$

$$D_2(t) = R(t) \cdot e^{+j2\pi fst}$$

où fs représente la fréquence de sous-harmonique, t=nTs, où Ts est la période d'échantillonnage, et n est déterminé par la périodicité de :
fs*nTs=1, ou n=1/(fs*Ts)
le traitement desdits signaux convertis D$_1$(t) et D$_2$(t) pour produire des estimations d'erreurs de synchronisation ($\tau$) et de fréquence (f$_e$) par :

$$\tau = \frac{T}{4\pi} \cdot \text{arc tangente} \left( C_1^*(t) \cdot C_{-1}(t) \right)$$

$$f_e = \frac{1}{4\pi T} \cdot \text{arc tangente} \left( C_{-1}(t) \cdot C_1(t) \right)$$

où C$_1$(t) et C$_{-1}$(t) sont les moyennes de D$_1$(t) et D$_2$(t), respectivement.

**2.** Procédé selon la revendication 1, dans lequel chaque signal de ladite pluralité de signaux en bande de base complexes (S$_1$(t), S$_2$(t)) possède un signal d'amplitude-intensité du signal de réception associé (RSSI$_1$, RSSI$_2$) généré par ledit moyen de traitement de signal associé dudit récepteur.

**3.** Procédé selon la revendication 2, dans lequel ladite étape de génération comprend en outre :

la sélection dudit signal différentiel R(t) à partir desdits signaux différentiels (RX$_1$(t), RX$_2$(t)) sur la base de l'étape de comparaison :

lorsque RSSI$_1$-RSSI$_2$ > première valeur de dB,

$$R(t) = RX_1(t)$$

lorsque RSSI$_2$-RSSI$_1$ > première valeur de dB,

$$R(t) = RX_2(t)$$

lorsque |RSSI$_1$-RSSI$_2$| < première valeur de dB,

$$R(t) = RX_1(t) + RX_2(t)$$

dans le cas où chaque signal de ladite pluralité de signaux en bande de base complexes ($S_1(t)$, $S_2(t)$) est un signal limité en amplitude.

4. Procédé selon la revendication 3, dans lequel ladite première valeur en dB est 5.

5. Procédé selon la revendication 2, dans lequel ladite étape de génération comprend en outre :

   la sélection dudit signal différentiel R(t) à partir desdits signaux différentiels ($RX_1(t)$, $RX_2(t)$) par une combinaison linéaire desdits signaux différentiels ($RX_1(t)$, $RX_2(t)$) conforme à

   $$R(t)=RX_1(t)+RX_2(t)$$

   dans le cas où chaque signal de ladite pluralité de signaux en bande de base complexes ($S_1(t)$, $S_2(t)$) a son amplitude rétablie par son signal d'amplitude-intensité de signal de réception associé ($RSSI_1$, $RSSI_2$).

6. Procédé selon la revendication 1, dans lequel ledit récepteur comporte une pluralité de moyens d'antennes espacés et de moyens de traitement de signal associés pour générer simultanément ladite pluralité de signaux en bande de base complexes ($S_1(t)$, $S_2(t)$)

7. Un sélecteur de diversité destiné à être utilisé avec un récepteur pour recevoir une pluralité de signaux électromagnétiques transmis sans fil, ledit récepteur ayant un moyen de traitement de signal associé destiné à générer une pluralité de signaux en bande de base complexes ($S_1(t)$, $S_2(t)$), à partir de ladite pluralité de signaux électromagnétiques transmis sans fil, ledit sélecteur de diversité comprenant :

   un moyen destiné à détecter de façon différente chacun desdits signaux en bande de base complexes ($S_1(t)$, $S_2(t)$) pour produire une pluralité de signaux différentiels ($RX_1(t)$, $RX_2(t)$) conformément à

   $$RX_1(t)= S_1(t) \cdot S_1^*(t-T),$$

   et

   $$RX_2(t)=S_2(t) \cdot S_2^*(t-T)$$

   où $S_x^*$ est le conjugué complexe de $S_x$ et T est un temps de transmission ou retard de symbole, un moyen destiné à générer un signal différentiel sélectionné R(t) à partir desdits signaux différentiels ($RX_1(t)$, $RX_2(t)$),

un moyen destiné à convertir ledit signal différentiel sélectionné R(t) pour produire une pluralité de signaux convertis $D_1(t)$ et $D_2(t)$, conformément à

$$D_1(t)=R(t) \cdot e^{-j2\pi fst}$$

$$D_2(t)=R(t) \cdot e^{+j2\pi fst}$$

où fs est la fréquence de sous-harmonique, $t=nTs$, où Ts est la période d'échantillonnage, et n est déterminé par la périodicité de :

$$fs*nTs=1, \text{ ou } n=1/(fs*Ts)$$

un moyen destiné à traiter lesdits signaux convertis $D_1(t)$ et $D_2(t)$ pour produire des signaux d'estimation d'erreurs de synchronisation ($\tau$) et de fréquence ($f_e$) par :

$$\tau = \frac{T}{4\pi} \cdot \text{arc tangente} \left( C_1^*(t) \cdot C_{-1}(t) \right)$$

$$f_e = \frac{1}{4\pi T} \cdot \text{arc tangente} \left( C_{-1}(t) \cdot C_1(t) \right)$$

où $C_1(t)$ et $C_{-1}(t)$ sont les moyennes de $D_1(t)$ et $D_2(t)$, respectivement.

8. Sélecteur selon la revendication 7, dans lequel ledit moyen de traitement de signal associé dudit récepteur comprend en outre un moyen destiné à générer un signal d'amplitude-intensité de signal de réception associé ($RSSI_1$, $RSSI_2$) pour chaque signal de ladite pluralité de signaux en bande de base complexes ($S_1(t)$, $S_2(t)$).

9. Sélecteur selon la revendication 8, dans lequel ledit moyen destiné à générer un signal différentiel sélectionné R(t) à partir desdits signaux différentiels ($RX_1(t)$, $RX_2(t)$), comprend en outre :

   un moyen destiné à comparer ladite pluralité de signaux d'amplitude-intensité de signal de réception ($RSSI_1$, $RSSI_2$) et à sélectionner ledit signal différentiel sélectionné R(t) conformément à :

   lorsque $RSSI_1-RSSI_2$ > première valeur de dB,

$$R(t)=RX_1(t)$$

lorsque $RSSI_2-RSSI_1 >$ première valeur de dB,

$$R(t)=RX_2(t)$$

lorsque $|RSSI_1-RSSI_2| <$ première valeur de dB,

$$R(t)=RX_1(t)+RX_2(t)$$

dans le cas où chaque signal de ladite pluralité de signaux en bande de base complexes ($S_1(t)$, $S_2(t)$) est un signal limité en amplitude.

10. Sélecteur selon la revendication 9, dans lequel la première valeur en dB est 5.

11. Sélecteur selon la revendication 8, dans lequel ledit moyen destiné à générer un signal différentiel sélectionné R(t) à partir desdits signaux différentiels ($RX_1(t)$, $RX_2(t)$) comprend en outre :

un moyen destiné à une combinaison linéaire desdits signaux différentiels ($RX_1(t)$, $RX_2(t)$) conforme à

$$R(t)=RX_1(t)+RX_2(t)$$

dans le cas où chacun de ladite pluralité de signaux en bande de base complexes ($S_1(t)$, $S_2(t)$) a son amplitude rétablie par son signal d'amplitude-intensité de signal de réception associé ($RSSI_1$, $RSSI_2$).

12. Sélecteur selon la revendication 7, dans lequel ledit récepteur comporte une pluralité de moyens d'antenne espacés et de moyens de traitement du signal associés destinés à générer simultanément ladite pluralité de signaux en bande de base complexes ($S_1(t)$, $S_2(t)$).

13. Récepteur de télécommunications destiné à recevoir un signal électromagnétique transmis sans fil, ledit récepteur comprenant :

des moyens d'antenne destinés à recevoir lesdits signaux électromagnétiques transmis sans fil et à convertir ceux-ci en une pluralité de signaux à haute fréquence (HF),
des moyens destinés à convertir ladite pluralité de signaux HF en une pluralité de signaux à fréquence intermédiaire (FI) présentant chacun une amplitude et à limiter l'amplitude de chaque signal FI et générer un signal d'amplitude-intensité de signal de réception (RSSI) associé à chaque signal FI,
un moyen de conversion de bande passante destiné à recevoir ladite pluralité de signaux FI et à produire une pluralité de signaux en bande de base complexes ($S_1(t)$, $S_2(t)$), un associé à chaque signal FI,
un moyen de sélecteur de diversité destiné à recevoir ladite pluralité de signaux en bande de base complexes ($S_1(t)$, $S_2(t)$), ledit moyen de sélecteur de diversité comprenant :

un moyen destiné à détecter de façon différentielle chacun desdits signaux en bande de base complexes ($S_1(t)$, $S_2(t)$) pour produire une pluralité de signaux différentiels ($RX_1(t)$, $RX_2(t)$), conformément à

$$RX_1(t) = S_1(t) \cdot S_1^*(t-T),$$

et

$$RX_2(t) = S_2(t) \cdot S_2^*(t-T)$$

où $S_x^*$ est le conjugué complexe de $S_x$ et T est un temps de propagation ou de transmission de symbole,
un moyen destiné à générer un signal différentiel sélectionné R(t) à partir desdits signaux différentiels ($RX_1(t)$, $RX_2(t)$),
un moyen destiné à convertir ledit signal différentiel sélectionné en R(t) pour produire une pluralité de signaux convertis $D_1(t)$ et $D_2(t)$ conformément à

$$D_1(t)=R(t) \cdot e^{-j2\pi fst}$$

$$D_2(t)=R(t) \cdot e^{+j2\pi fst}$$

où fs représente la fréquence de sous-harmonique, t=nTs, où Ts est la période d'échantillonnage et n est déterminé par la périodicité de :

$$fs*nTs=1, \text{ ou } n=1/(fs*Ts)$$

un moyen destiné à traiter lesdits signaux convertis $D_1(t)$ et $D_2(t)$ pour produire des estimations d'erreurs de synchronisation ($\tau$) et de fréquence ($f_e$) par :

$$\tau = \frac{T}{4\pi} \cdot \text{arc tangente} \left(C_1^*(t) \cdot C_{-1}(t)\right)$$

$$f_e = \frac{1}{4\pi T} \cdot \text{arc tangente} \left(C_{-1}(t) \cdot C_1(t)\right)$$

où $C_1(t)$ et $C_{-1}(t)$ sont les moyennes de $D_1(t)$ et $D_2(t)$, respectivement, et
un moyen destiné à recevoir lesdits signaux d'estimation d'erreurs de synchronisation ($\tau$) et de fréquence ($f_e$) et à détecter des symboles dans ledit signal différentiel sélectionné R(t).

14. Récepteur selon la revendication 13, dans lequel ledit moyen de conversion de bande passante dudit récepteur comprend en outre un moyen destiné à générer un signal d'amplitude-intensité de signal de réception associé ($RSSI_1$, $RSSI_2$) pour chaque signal de ladite pluralité de signaux en bande de base complexes ($S_1(t)$, $S_2(t)$).

15. Récepteur selon la revendication 14, dans lequel ledit moyen destiné à générer un signal différentiel sélectionné R(t) à partir desdits signaux différentiels ($RX_1(t)$, $RX_2(t)$), comprend en outre :

un moyen destiné à comparer ladite pluralité de signaux d'amplitude-intensité de signal de réception ($RSSI_1$, $RSSI_2$) et à sélectionner ledit signal différentiel sélectionné R(t) conformément à :

lorsque $RSSI_1$-$RSSI_2$> première valeur de dB,

$$R(t)=RX_1(t)$$

lorsque $RSSI_2$-$RSSI_1$ > première valeur de dB,

$$R(t)=RX_2(t)$$

lorsque $|RSSI_1$-$RSSI_2| <$ première valeur de dB,

$$R(t)=RX_1(t)+RX_2(t)$$

dans le cas où chaque signal de ladite pluralité de signaux en bande de base complexes ($S_1(t)$, $S_2(t)$) est un signal limité en amplitude.

16. Sélecteur selon la revendication 15, dans lequel ladite première valeur en dB est 5.

17. Sélecteur selon la revendication 14, dans lequel ledit moyen destiné à générer un signal différentiel sélectionné R(t) à partir desdits signaux différentiels ($RX_1(t)$, $RX_2(t)$), comprend en outre :

un moyen destiné à une combinaison linéaire desdits signaux différentiels ($RX_1(t)$, $RX_2(t)$) conformes à

$$R(t)=RX_1(t)+RX_2(t)$$

dans le cas où chaque signal de ladite pluralité de signaux en bande de base complexes ($S_1(t)$, $S_2(t)$) a son amplitude rétablie par son signal d'amplitude-intensité de signal de réception associé ($RSSI_1$, $RSSI_2$).

18. Sélecteur selon la revendication 13, dans lequel lesdits moyens d'antenne comprennent une pluralité d'antennes espacées et lesdits moyens de conversion de bande passante afin de générer simultanément ladite pluralité de signaux en bande de base complexes ($S_1(t)$, $S_2(t)$).

FIG. 1

EP 0 737 380 B1

FIG. 3

FIG. 2

FIG. 4

EP 0 737 380 B1

FIG. 5

$f_{sub}$ = sub-harmonic frequency

FIG. 6

FIG. 7

FIG. 8

FIG. 9A

FIG. 9B

FIG. 10

FIG. 11

FIG. 12